# EUROPEAN PATENT APPLICATION

(11) **EP 3 859 838 A1**
(43) Date of publication of application: **04.08.2021**
(21) Application number: 19865118.4
(22) Date of filing: 27.09.2019
(51) Int. Cl.: H01M 4/525, H01M 4/505, H01M 4/485, H01M 4/62, H01M 4/36, H01M 10/052, C01G 53/00, C01G 25/02

(54) **CATHODE ACTIVE MATERIAL FOR LITHIUM SECONDARY BATTERY, PREPARATION METHOD THEREFOR, AND LITHIUM SECONDARY BATTERY COMPRISING SAME**

(30) Priority: 28.09.2018 KR 20180116034
(71) Applicant: POSCO, Gyeongsangbuk-do 37859 (KR); Research Institute of Industrial Science & Technology, Pohang-si, Gyeongsangbuk-do 37673 (KR)
(72) Inventor: CHOI, Kwon Young, Seoul 07987 (KR); LEE, Sang Hyuk, Incheon 22405 (KR); SONG, Jung Hoon, Seoul 07064 (KR); NAM, Sang Cheol, Seoul 02587 (KR); PARK, Jong Il, Pohang-si Gyeongsangbuk-do 37666 (KR)
(74) Representative: Potter Clarkson
(86) International application number: PCT/KR2019/012631
(87) International publication number: WO 2020/067795

(57) **Abstract**

The present invention relates to a cathode active material for a lithium secondary battery, a preparation method therefor, and a lithium secondary battery comprising same, and the cathode active material includes a lithium nickel cobalt manganese-based oxide represented by Chemical Formula 1 including secondary particles obtained by agglomerating at least one primary particle, and a metal oxide particles having a nano-sized average diameter (D50) and disposed inside the secondary particles.

[Chemical Formula 1] Liₐ[NiₓCo_{y}Mn_{z}]ₜM₁₋ₜO₂₋ₚXₚ

(In Chemical Formula 1, the definition of each substituent is the same as that in the Detailed Description)

## Description

### [Technical Field]

The present embodiment relates to a cathode active material for a lithium secondary battery, a preparation method therefor, and a lithium secondary battery including the same.

### [Background Art]

Recently, due to the explosively-increasing demand for IT mobile devices and small electric power drive devices (e-bikes, small electric vehicles, and the like) and the demand for electric vehicles with a mileage of 400 km or more, development of a secondary battery having high capacity and high energy density for driving these has been actively progressing, and in order to manufacture such a high-capacity battery, a high-capacity cathode active material is required.

Among the existing layered cathode active materials, LiNiO₂ has the highest capacity (275 mAh/g) but an easily-collapsing structure during the charge and discharge and low thermal stability due to the oxidation number problem and thus may be difficult to commercialize. In order to solve this problem, a ternary NCM-based active material containing Li, Ni, Co, and Mn has been developed by substituting on unstable Ni sites with other stable transition metals (Co, Mn, and the like). However, in such a ternary NCM-based active material, as a Ni content is increased, various doping additives should be applied thereto to secure structural safety but may deteriorate capacity. In addition, as the Ni content is increased, resistance also increases at the beginning of the discharge.

### [Disclosure]

### [Technical Problem]

An embodiment provides a cathode active material for a lithium secondary battery that exhibits low initial resistance at high temperature and excellent discharge capacity.

Another embodiment provides a method of preparing the cathode active material for a lithium secondary battery.

Another embodiment provides a lithium secondary battery including the cathode active material.

### [Technical Solution]

According to an embodiment, a cathode active material for a lithium secondary battery includes a lithium nickel cobalt manganese-based oxide represented by Chemical Formula 1 including secondary particles obtained by agglomerating at least one primary particle; and metal oxide particles having a nano-sized average diameter (D50) and disposed inside the secondary particles.

[Chemical Formula 1] Liₐ[NiₓCo_{y}Mn_{z}]ₜM₁₋ₜO₂₋ₚXₚ

In Chemical Formula 1,
M is any one element selected from Al, Mg, Sn, Ca, Ge, Ga, B, Ti, Mo, Nb, and W,
X is any one element selected from F, N, and P,
0.8≤a≤1.3,
0.6 ≤x ≤ 0.95, 0 < y ≤ 0.2, 0 < z ≤ 0.2, x + y + z = 1, 0 ≤ t ≤ 1, and 0 ≤ p ≤ 0.1.

In an embodiment, 0.8 ≤ x ≤ 0.95, 0 < y ≤ 0.1, and 0 < z ≤ 0.1.

The metal oxide may be at least one selected from ZrO₂, WO₃, CeO₂, TiO₂, HfO₂, Co₃O₄, La₂O₃, BaO, SrO, and a combination thereof.

The metal oxide may have an average particle diameter (D50) of 50 nm to 800 nm.

A metal content of the metal oxide may be 0.1 wt% to 0.7 wt% based on 100 wt% of the cathode active material.

In an embodiment, the secondary particles may include a core portion in which a nickel molar content is constant and a shell portion which surrounds the outer surface of the core portion and has a concentration gradient in which a nickel molar content gradually decreases in a direction from the interface with the core portion to the outermost surface.

It may further include a coating layer disposed on the surface of the secondary particles.

According to another embodiment, a method for preparing a cathode active material for a lithium secondary battery includes preparing hydroxide precursor particles including nickel, cobalt, and manganese; subjecting the hydroxide precursor particles to first firing to prepare porous oxide precursor particles; mixing the oxide precursor particles and a metal oxide to prepare a first mixture; mixing the first mixture and a lithium raw material to prepare a second mixture; and subjecting the second mixture to second firing.

The first firing may be performed by increasing a temperature up to 400 °C to 800 °C at 1.0 °C/min to 5.0 °C/min, and maintaining for 3 hours to 20 hours. In addition, the first firing may be performed while blowing air or oxygen at a rate of 10 mL/min to 50 L/min.

In the mixing of the oxide precursor particles and a metal oxide to prepare a first mixture, a doping raw material may be further mixed.

Another embodiment provides a lithium secondary battery including a cathode including the cathode active material; an anode; and a non-aqueous electrolyte.

### [Advantageous Effects]

The cathode active material for a lithium secondary battery according to an embodiment may exhibit low initial resistance at high temperature and excellent discharge capacity.

### [Description of the Drawings]

FIG. 1 is a view schematically illustrating a structure of a lithium secondary battery according to an embodiment.
FIG. 2 is a SEM photograph of the surface of the hydroxide precursor prepared according to Preparation Example 1.
FIG. 3 is an SEM photograph of the surface of a porous oxide precursor prepared according to Preparation Example 3.
FIG. 4 is a cross-sectional EDS measurement photograph of a cathode active material prepared according to Example 1.
FIG. 5 is a cross-sectional EDS measurement photograph of a cathode active material prepared according to Comparative Example 1.

### [Mode for Invention]

Hereinafter, embodiments of the present invention are described in detail. However, these embodiments are exemplary, the present invention is not limited thereto and the present invention is defined by the scope of claims.

A cathode active material for a lithium secondary battery according to an embodiment includes a lithium nickel cobalt manganese-based oxide represented by Chemical Formula 1 including secondary particles obtained by agglomerating at least one primary particle, and metal oxide particles disposed inside the secondary particles and having an average particle diameter (D50) of nanometers.

[Chemical Formula 1] Liₐ[NiₓCo_{y}Mn_{z}]ₜM₁₋ₜO₂₋ₚXₚ

In Chemical Formula 1,
M is any one element selected from Al, Mg, Sn, Ca, Ge, Ga, B, Ti, Mo, Nb, and W, X is any one element selected from F, N, and P.

In addition, 0.8 ≤ a ≤ 1.3, 0.6 ≤ x ≤ 0.95, 0 < y ≤ 0.2, 0 < z ≤ 0.2, x + y + z = 1, 0 ≤ t ≤ 1, and 0 ≤ p ≤ 0.1. In addition, 0.8 ≤ x ≤ 0.95, 0 < y ≤ 0.1, and 0 < z ≤ 0.1.

The metal oxide may be at least one selected from ZrO₂, WO₃, CeO₂, TiO₂, HfO₂, Co₃O₄, La₂O₃, BaO, SrO, and a combination thereof.

The metal oxide may have an average particle diameter (D50) of 50 nm to 800 nm, and when the average particle diameter (D50) of the metal oxide is included in the above range, the metal oxide may be inserted into the secondary particles. When the metal oxide has an average particle diameter (D50) of smaller than 50 nm, there is a problem that the metal oxide may be agglomerated and less likely inserted into the secondary particles. In addition, when the metal oxide has an average particle diameter (D50) of larger than 600 nm, the oxide particles are larger than pore sizes of the secondary particles and thus may be less likely inserted into the secondary particles. Unless otherwise defined in the present specification, the average particle diameter (D50) refers to a diameter of a particle at 50 volume%.

In this way, as the cathode active material according to an embodiment includes the metal oxide such as ZrO₂, particularly, the metal oxide having a nm-sized average particle diameter (D50) in the form of particles inside the secondary particles, high temperature initial resistance may be decreased, and discharge capacity may be improved. Particularly, the metal oxide particles having a nanometer-sized average particle diameter (D50) may more effectively solve problems of the resistance increase during the initial discharge and structural safety degradation, which may more severely occur in case of a high content Ni cathode active material. Herein, the high content Ni cathode active material includes Ni, Co, and Mn as a main component, as represented by Chemical Formula 1, and means a cathode active material including 60 mol% or greater or 80 mol% or greater of Ni based on 100 mol% of the total amount of Ni, Co, and Mn.

When metals are present not in the form of oxide but in the form doped on an active material, that is, are not separately present in the form of particles, the metals are inserted into a metal site structure of a lithium nickel cobalt manganese-based oxide represented by Chemical Formula 1, deteriorating charge and discharge capacity. In addition, there may be a problem of increasing high temperature initial resistance and also deteriorating charge and discharge efficiency.

A metal content in the metal oxide may be 0.1 wt% to 0.7 wt% based on 100 wt% of the cathode active material. When the metal content in the metal oxide is within the range, initial discharge capacity may be more effectively increased, and initial discharge DC-IR (direct-current internal resistance) may be more effectively reduced.

In an embodiment, the secondary particle may include a core portion in which a nickel molar content is constant and a shell portion which surrounds the outer surface of the core portion and has a concentration gradient in which a nickel molar content gradually decreases in a direction from the interface with the core portion to the outermost surface. That is, it has a core-shell concentration gradient ("CSG"). In this way, when the primary particles have the core-shell concentration gradient, since the core portion maintains a high nickel content, high capacity due to the high nickel content may be obtained, but in the shell portion, the nickel content gradually decreases. Accordingly, in the shell portion, contents of Mn, Co, and optionally, M except for the nickel may increase and thus improve structural stability of the cathode active material.

Resultantly, the cathode active material includes the secondary particles in which the primary particles including a core portion represented by Chemical Formula 1a and a shell portion represented by Chemical Formula 1b are agglomerated. Herein, in the core portion, a nickel molar content, that is, x is 0.6 or greater in Chemical Formula 1, is constantly maintained at 60 mol% or greater based on 100 mol% of total molar contents of nickel, cobalt, and manganese among metal elements constituting the cathode active material, and in the shell portion, the nickel molar content gradually decreases in a direction from the interface with the core portion to the outermost surface. Accordingly, the total composition of the cathode active material has Chemical Formula 1, wherein the core portion and the shell portion have each composition of Chemical Formulas 1a and 1b, and in addition, the core portion maintains a constant nickel molar content, while the shell portion has a gradually decreasing nickel molar content.

[Chemical Formula 1a] Liₐ₁[Niₓ₁Co_{y1}Mn_{z1}]t₁M₁₋t₁O₂₋ₚ₁Xₚ₁

In Chemical Formula 1a,
M is any one element selected from Al, Mg, Sn, Ca, Ge, Ga, B, Ti, Mo, Nb, and W, X is any one element selected from F, N, and P,
a1 may be 0.8≤a≤1.3,0.6 ≤ x1 ≤ 1.0, 0 < y1 ≤ 0.2, 0 < z1 ≤ 0.2, x1 + y1 + z1 = 1, 0 ≤ t1 ≤ 1, and 0 ≤ p1 ≤ 0.1.

[Chemical Formula 1b] Liₐ₂[Niₓ₂CO_{y2}Mn_{z2}]t₂M₁₋ₜ₂O₂₋ₚ₂Xₚ₂

In Chemical Formula 1b,
M is any one element selected from Al, Mg, Sn, Ca, Ge, Ga, B, Ti, Mo, Nb, and W, X is any one element selected from F, N, and P,
A2 may be 0.8≤a≤1.3,0.4 ≤ x2 ≤ 0.9, 0 < y2 ≤ 0.2, 0 < z2 ≤ 0.2, x2 + y2 + z2 = 1, 0 ≤ t2 ≤ 1, and 0 ≤ p2 ≤ 0.1.

In the cathode active material having this structure, since the nickel molar content is constantly maintained and particularly, highly maintained in the core portion, high-capacity may be obtained. In addition, since the nickel content in the shell portion is decreased, while the contents of cobalt, manganese, and M except for the nickel are increased, the structure of the cathode active material may be stabilized. Furthermore, since the metal oxide such as ZrO₂ is included inside the secondary particles, effects of decreasing resistance and increasing capacity during the initial discharge may be much improved.

The concentration gradient may have a ratio of a nickel molar content at the outermost relative to a nickel molar content on the interface with the core portion in a range of 0.6 to 0.95. When the nickel concentration gradient satisfies the conditions, capacity of the cathode active material may be more increased, and in addition, charge and discharge cycle performance and thermal safety may be more improved through surface structural stabilization of the cathode active material.

In the secondary particles of the cathode active material, the core portion may have an average particle diameter (D50) of 60% to 90% based on 100% of the total average particle diameter (D50) of the cathode active material secondary particles.

The cathode active material includes the secondary particles in which primary particles, that is, at least one primary particle is agglomerated, and the secondary particles may have an average particle diameter (D50) of 7 µm to 20 µm. When the secondary particles have an average particle diameter (D50) within the range, filling density may be further improved. The average particle diameter (D50) of the primary particles is smaller than that of the secondary particles and may be appropriately adjusted but is not particularly limited thereto.

In addition, the cathode active material may be composed of only the secondary particles having the average particle diameter (D50) or in a bi-modal form that large particle diameter particles and small particle diameter particles are mixed. When the cathode active material is in the bi-modal, the large particle diameter particles may have an average particle diameter (D50) of 10 µm to 20 µm, and the small particle diameter particles may have an average particle diameter (D50) of 3 µm to 7 µm. Herein, the large particle diameter particles and the small particle diameter particles also may be in the form of the secondary particles in which at least one primary particle is agglomerated. In addition, when the large particle diameter particles and the small particle diameter particles are mixed, 50 wt% to 80 wt% of the large particle diameter particles based on 100 wt% of the total amount may be used. Energy density may be improved due to this bi-modal particle distribution.

In an embodiment, a coating layer disposed on the surface of the secondary particles of the cathode active material may be further included. The coating layer may include boron, boron oxide, lithium boron oxide, or a combination thereof. However, this is only an example, and various coating materials used for the cathode active material may be used. In addition, the content and thickness of the coating layer may be appropriately adjusted, and is not specifically limited.

In an embodiment, a method of preparing a cathode active material for a lithium secondary battery includes preparing hydroxide precursor particles including nickel, cobalt, and manganese; subjecting the hydroxide precursor particles to first firing to prepare porous oxide precursor particles; mixing the oxide precursor particles and a metal oxide to prepare a first mixture; mixing the first mixture and a lithium raw material to prepare a second mixture; and subjecting the second mixture to second firing.

Hereinafter, a method of preparing the cathode active material will be described in more detail.

First, a hydroxide precursor particle including nickel, cobalt, and manganese is prepared.

The hydroxide precursor particles may be prepared by mixing a nickel raw material, a cobalt raw material, a manganese raw material, and a solvent, co-precipitating the mixture, and then drying. The amounts of the nickel raw material, cobalt raw material, and manganese raw material used may be adjusted in an appropriate mole ratio according to the compound having a desired composition, and in the mixture, the total metal concentration of nickel, cobalt, and manganese may be 1 M to 3 M.

The nickel raw material may be nickel hydroxide, nickel carbonate, nickel nitrate, nickel sulfate, a hydrate thereof, or a combination thereof, and the cobalt raw material may be Co(OH)₂, Co₃O₄, CoO, Co(SO₄), a hydrate thereof, or a combination thereof. In addition, the manganese raw material may be manganese hydroxide, manganese carbonate, manganese nitrate, manganese sulfate, a hydrate thereof, or a combination thereof.

The solvent may be water, for example, deionized water or distilled water. In the co-precipitation process, a chelating agent and a pH adjusting agent may be further used. The chelating agent may include NH₄(OH), NH₂CH₂CH₂NH₂, or a combination thereof. In addition, the pH adjusting agent may adjust the pH to 10.0 to 12.0 by using an alkali such as NaOH and ammonia. When using the chelating agent and the pH adjusting agent, the feed rate does not need to be particularly limited, and for example, they may be supplied at a feed rate of 0.05 liters/hour to 0.5 liters/hour, respectively.

The co-precipitation process may be performed under a condition of removing dissolved oxygen by supplying an inert gas, for example, a nitrogen gas (N₂) in order to prevent oxidation of Ni. The nitrogen gas may be supplied at an appropriate feed rate for removing the dissolved oxygen, for example, at 1 L/min to 4 L/min. In addition, the co-precipitation process may be performed at 30 °C to 60 °C, while stirred at 120 rpm to 160 rpm, but the temperature and the stirring speed may not be limited thereto.

In addition, the drying process may be carried out at a temperature of 80 °C to 120 °C.

In the co-precipitation process, a first metal salt solution and a second metal salt solution including a nickel raw material, a cobalt raw material, a manganese raw material, and a solvent and having each different molar concentration of the nickel raw material are prepared. Subsequently, a first co-precipitation of forming the core portion is performed by supplying the first metal salt solution in a reactor in which pH is constantly kept and into which a chelating agent is supplied. After the first co-precipitation, a second co-precipitation of forming the shell portion surrounding the core portion may be performed by gradually decreasing the feed rate of the first metal salt aqueous solution and simultaneously, gradually increasing a feed rate of the second metal salt aqueous solution. When the co-precipitation process is performed with the first and second co-precipitations, a hydroxide precursor particle including the core portion and the shell portion is prepared wherein the core portion includes nickel, cobalt, and manganese and a molar content of the nickel is constant and the shell portion surrounding the core portion has a concentration gradient where the molar content of the nickel gradually decreases in a direction in a direction from the interface with the core portion to the outermost surface.

The first metal salt aqueous solution starts to be supplied at 0.5 L/hour to 1.0 L/hour, which is gradually decreased down to 0.05 L/hour to 0.5 L/hour, and the second metal salt aqueous solution is supplied at 0.5 L/hour to 1.0 L/hour.

Subsequently, the hydroxide precursor particles are first fired to prepare porous oxide precursor particles. The first firing may be performed by increasing a temperature up to 400 °C to 800 °C at 1.0 °C/min to 5.0 °C/min and maintaining it for 3 hours to 20 hours. In addition, the first firing may be performed by blowing air or oxygen at 10 ml/min to 50 L/min thereinto.

When the first firing is performed under the conditions, the hydroxide precursor is converted into an oxide precursor, preparing a porous oxide precursor having pores in the surface portion. The pores are spaces into which the metal oxide is inserted during the mixing with the metal oxide, and accordingly, the metal oxide in the form of particles may remain in a final active material due to formation of the pores.

When the temperature increasing condition of the first firing process is slower or faster than the range, when the maintained temperature is low or high, or when the maintaining time is shorter than the above time, the pores may not be formed in the surface portion. The reason is that an oxidation reaction of the hydroxide precursor, Me (OH)₂(s) → MeO(s) + H₂O(g), is not completed, the process of forming pores does not occur as the generated H₂O is volatilized .

The oxide precursor particles are mixed with the metal oxide to prepare a first mixture. Herein, the metal oxide is inserted into the pores formed in the surface portions of the oxide precursor particles. The metal oxide may be ZrO₂, WO₃, CeO₂, TiO₂, HfO₂, Co₃O₄, La₂O₃, BaO, SrO, or a combination thereof.

In the mixing the oxide precursor particles and the metal oxide to prepare the first mixture, a doping raw material may be further mixed therewith. The doping raw material may be a compound including any one element selected from Al, Mg, Sn, Ca, Ge, Ga, B, Ti, Mo, Nb, and W, which is a hydroxide, a carbonate, a nitrate, a sulfate, a hydrate thereof, or a combination thereof.

The obtained first mixture and a lithium raw material are mixed to prepare a second mixture. The lithium raw material may be lithium hydroxide, lithium carbonate, lithium nitrate, lithium sulfate, a hydrate thereof, or a combination thereof.

In this way, since the precursor is first mixed with the metal oxide before mixed with the lithium raw material, most of the metal oxide may be positioned in the pores formed in the surface portions of the oxide precursor particles and then, mixed with the lithium raw material after filled in the pores, forming a second mixture with a structure that the metal oxide is covered with the lithium raw material.

Subsequently, the second mixture is second fired, obtaining a cathode active material for a lithium secondary battery. The second firing process may be performed by increasing a temperature at 1.0 °C/min to 5.0 °C/min up to 700 °C to 900 °C and maintaining it for 10 hours to 24 hours. In addition, the second firing may be performed by blowing air or oxygen at 10 ml/min to 50 L/min thereinto.

After performing the second firing process, a coating layer may be further formed. The coating layer forming process may be performed by mixing a product obtained by the second firing process and a coating raw material, and heat-treating the resultant. The coating raw material may include boron, boron oxide, H₃BO₃, lithium boron oxide, or a combination thereof. The heat-treating process may be performed at 300 °C to 500 °C for 5 to 10 hours.

Even though the second firing process and optionally, a process of further forming a coating layer are performed, since the metal oxide is located in the pores formed in the surface portions of the oxide precursor particles in a state of being covered with the lithium raw material, the metal oxide may be maintained in the form of metal oxide particles in a final cathode active material.

In another embodiment, a lithium secondary battery includes a cathode; an anode; and a non-aqueous electrolyte, wherein the cathode includes the aforementioned cathode active material according to an embodiment.

The cathode includes a cathode active material layer disposed on the cathode current collector. The cathode active material layer may include a cathode active material and the cathode active material may include the aforementioned cathode active material for a lithium secondary battery according to an embodiment.

In the cathode active material layer, a content of the cathode active material may be 90 wt% to 98 wt% based on a total weight of the cathode active material layer.

In an embodiment, the cathode active material layer may further include a binder and a conductive material. In this case, each content of the binder and the conductive material may be 1 wt% to 5 wt%, based on a total weight of the cathode active material layer.

The binder serves to attach the cathode active material particles well to each other, and to attach the cathode active material to the current collector well. Examples of the binder may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material is used to impart conductivity to the electrode, and any material may be used as long as it does not cause chemical change in the battery to be configured and is an electron conductive material. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The cathode current collector may be an aluminum foil, a nickel foil, or a combination thereof, but is not limited thereto.

The anode includes an anode current collector and an anode active material layer disposed on the current collector. The anode active material layer includes an anode active material.

The anode active material may include a material that reversibly intercalates/deintercalates lithium ions, a lithium metal, a lithium metal alloy, a material capable of doping/dedoping lithium, or a transition metal oxide.

As a material capable of reversibly intercalating/deintercalating lithium ions, for example, a carbon material, that is, a carbon-based anode active material generally used in lithium secondary batteries may be mentioned. An example of the carbon-based anode active material may include crystalline carbon, amorphous carbon, or a mixture thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a silicon-based material, for example, Si, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), a Si-carbon composite, Sn, SnO₂, Sn-R (wherein R is an element selected from an alkali metal, an alkaline-earth metal, a Group 13 element, a Group 14 element, a Group 15 element, a Group 16 element, a transition metal, a rare earth element, and a combination thereof, and not Sn), a Sn-carbon composite, and the like and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide includes lithium titanium oxide.

In the anode active material layer, the anode active material may be included in an amount of 95 wt% to 99 wt% based on a total weight of the anode active material layer.

The anode active material layer includes an anode active material and a binder, and optionally a conductive material.

In the anode active material layer, the anode active material may be included in an amount of 95 wt% to 99 wt% based on a total weight of the anode active material layer. In the anode active material layer, a content of the binder may be 1 wt% to t 5 wt% based on a total weight of the anode active material layer. When the anode active material layer includes a conductive material, the anode active material layer includes 90 wt% to 98 wt% of the anode active material, 1 wt% to 5 wt% of the binder, and 1 wt% to 5 wt% of the conductive material.

The binder improves binding properties of anode active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may be a styrene-butadiene rubber, an acrylated styrene-butadiene rubber, a polyvinyl alcohol, sodium polyacrylate, a copolymer of propylene and a C2 to C8 olefin, a copolymer of (meth)acrylic acid and (meth)acrylic acid alkyl ester, or a combination thereof.

When the water-soluble binder is used as an anode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metals may be Na, K, or Li. The thickener may be included in an amount of 0.1 to 3 parts by weight based on 100 parts by weight of the anode active material.

The conductive material is included to cathode conductivity and any electrically conductive material may be used as a conductive material unless it causes a chemical change. Examples of the conductive material include a carbon-based material such as natural graphite, artificial graphite, carbon black, acetylene black, ketjen black, denka black, carbon fiber, and the like; a metal-based material of a metal powder or a metal fiber including copper, nickel, aluminum silver, and the like; a conductive polymer such as a polyphenylene derivative; or a mixture thereof.

The anode current collector may include one selected from a copper foil, a nickel foil, a stainless steel foil, a titanium foil, a nickel foam, a copper foam, a polymer substrate coated with a conductive metal, and a combination thereof.

The non-aqueous electrolyte includes a non-aqueous organic solvent and a lithium salt.

The non-aqueous organic solvent serves as a medium for transmitting ions taking part in the electrochemical reaction of a lithium secondary battery.

The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like, and the ester-based solvent may include methyl acetate, ethyl acetate, n-propyl acetate, dimethyl acetate, methylpropionate, ethylpropionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone, and the like. The alcohol-based solvent may include ethanol, isopropyl alcohol, and the like, and the aprotic solvent may include nitriles such as R-CN (R is a C2 to C20 linear, branched, or cyclic hydrocarbon group, a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture. When the organic solvent is used in a mixture, the mixture ratio may be controlled in accordance with a desirable battery performance.

In addition, in the case of a carbonate-based solvent, it is desirable to use a mixture of cyclic carbonate and chain carbonate. In this case, when the cyclic carbonate and the chain carbonate are mixed in a volume ratio of 1:1 to 1:9, the electrolyte may exhibit excellent performance.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 2.

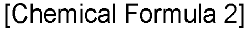

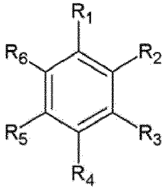

In Chemical Formula 2, R₁ to R₆ are the same or different and are selected from hydrogen, halogen, C1 to C10 alkyl group, haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The non-aqueous electrolyte may further include an additive of vinylene carbonate or an ethylene carbonate-based compound represented by Chemical Formula 3 to improve cycle life.

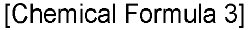

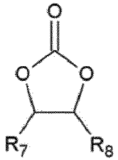

In Chemical Formula 3, R₇ and R₈ are the same or different, and selected from hydrogen, a halogen, a cyano group (CN), a nitro group (NO₂), and a fluorinated C1 to C5 alkyl group, provided that at least one of R₇ and R₈ is selected from a halogen, a cyano group (CN), a cyano group (CN), a nitro group (NO₂), and a fluorinated C1 to C5 alkyl group, and R₇ and R₈ are not simultaneously hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle life may be used within an appropriate range.

The lithium salt dissolved in an organic solvent supplies a battery with lithium ions, basically operates the lithium secondary battery, and improves transportation of the lithium ions between the cathode and anode. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), where x and y are natural numbers, LiCI, Lil, and LiB(C₂O₄)₂ (lithium bis(oxalato) borate; LiBOB). A concentration of the lithium salt may range from 0.1 M to 2.0 M. When the lithium salt is included at the above concentration range, an electrolyte may have excellent performance and lithium ion mobility due to optimal electrolyte conductivity and viscosity.

In addition, the lithium secondary battery may include a separator between a cathode and an anode. The cathode, anode, and separator impregnate an electrolyte solution.

The separator may be any generally-used separator in a lithium secondary battery which can separate the cathode and the anode and provide a transporting passage for lithium ions. In other words, it may have low resistance to ion transport and excellent impregnation for an electrolyte solution.

The separator may be, for example, selected from a glass fiber, polyester, polyethylene, polypropylene, polytetrafluoroethylene, or a combination thereof and may have a form of a non-woven fabric or a woven fabric. For example, in a lithium secondary battery, a polyolefin-based polymer separator such as polyethylene and polypropylene is mainly used, in order to ensure the heat resistance or mechanical strength, a coated separator including a ceramic component or a polymer material may be used, and optionally, it may have a single-layered or multi-layered structure.

In addition, the separator may include polyethylene, polypropylene, polyvinylidene fluoride, and multi-layers thereof such as a polyethylene/polypropylene double-layered separator, a polyethylene/polypropylene/polyethylene triple-layered separator, or a polypropylene/polyethylene/polypropylene triple-layered separator.

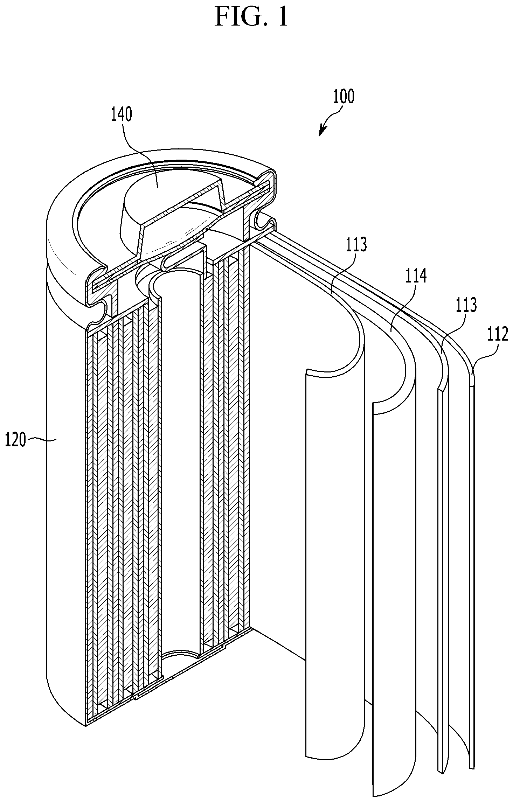

FIG. 1 schematically shows a lithium secondary battery according to an embodiment. A lithium secondary battery according to an embodiment is for example a cylindrical battery. However, the present invention is not limited thereto, and may be applied to various types of batteries such as a prismatic type, a pouch type, and the like.

Referring to FIG. 1, the lithium secondary battery 100 is cylindrical and includes an anode 112, a cathode 114, and a separator 113 between the anode 112 and the cathode 114, an electrolyte (not shown) impregnated in the anode 112, the cathode 114, and the separator 113, and a sealing member 140 sealing the battery case 120.

Such a lithium secondary battery 100 is manufactured by sequentially stacking the anode 112, cathode 114, and separator 113, spiral-winding the resultant, and accommodating the spiral-wound body in the battery case 120.

Hereinafter, examples of the present invention and comparative examples are described. These examples, however, are not in any sense to be interpreted as limiting the scope of the invention.

### (Preparation Example 1: Large Particle Diameter Active Material Hydroxide Precursor)

### 1) Preparation of Metal Salt Solution

Two metal salt aqueous solutions having different Ni, Co, and Mn concentrations were prepared by adding NiSO₄ • 6H₂O as a nickel raw material, CoSO₄ • 7H₂O as a cobalt raw material, and MnSO₄ • H₂O as a manganese raw material to deionized water and dissolving them therein.

The first metal salt aqueous solution for forming a core portion was prepared by mixing the raw materials in the deionized water to satisfy a stoichiometric mole ratio of (Ni_{0.98}Co_{0.01}Mn_{0.01})(OH)₂, so that total metal salts thereof might have a molar concentration of 2.5 M.

Independently, the second metal salt aqueous solution for a shell portion was prepared by mixing the raw materials in the deionized water to satisfy a stoichiometric mole ratio of (Ni_{0.64}Co_{0.23}Mno₁₃)(OH)₂, so that the total metal salts thereof might have a molar concentration of 2.5 M.

### 2) Co-precipitation Process

A co-precipitation reactor having two metal salt aqueous solution feed tanks coupled in series was prepared, and then, the first and second metal salt an aqueous solutions were respectively charged in the metal salt aqueous solution feed tanks.

After putting 3 L of distilled water in the co-precipitation reactor and then, supplying nitrogen gas at a feed rate of 2 L/min thereinto to remove dissolved oxygen, the co-precipitation reactor (capacity: 20 L, an output of rotary motor: 200 W) was stirred at 140 rpm, while maintained at 50 °C.

In addition, NH₄(OH) at a concentration of 14 M as a chelating agent at 0.06 L/hour and a NaOH solution at a concentration of 8 M as a pH adjusting agent at 0.1 L/hour, respectively, were continuously added to the reactor, but input amounts thereof were appropriately controlled to maintain pH 12 in the reactor during the process.

In the reactor where the pH was maintained and the chelating agent was supplied, while the first metal salt aqueous solution was put at 0.4 L/hour from the two metal salt aqueous solution feed tanks connected in series to the reactor, an impeller speed of the reactor was adjusted into 140 rpm to perform a co-precipitation reaction until precipitates had a diameter of about 11.1 µm (corresponding to 75% of a final product diameter). Herein, the solutions were controlled to reside in the reactor for 10 hours at average by adjusting their flow rates, and after a reaction reached a steady state, the reactants were allowed to a little longer stay in the steady state to obtain a denser co-precipitation compound.

Subsequently, a mixing ratio of the first and second metal salt aqueous solutions was changed to supply them at a total feed rate of 0.5 L/hour, wherein the first metal salt aqueous solution started to be supplied at a feed rate of 0.5 L/hour, but the feed rate was gradually reduced down into 0.05 L/hour, and the second metal salt aqueous solution was supplied at a feed rate of 0.5 L/hour. Herein, the solutions were controlled to reside in the reactor within 20 hours at average by adjusting the flow rates, and the co-precipitation reaction was performed until final precipitates had a diameter of 14.8 µm.

### 3) Post Treatment Process

The precipitates obtained according to the co-precipitation process were filtered, washed with water, and dried in a 100 °C oven for 24 hours to prepare a large particle diameter particle active material precursor having a composition of (Ni_{0.88}Co_{0.095}Mn_{0.025})(OH)₂ and an average particle diameter of 15 µm.

### (Preparation Example 2: Small Particle Diameter Cathode Active Material Hydroxide Precursor)

### 1) Preparation of Metal Salt Solution

The same first and second metal salt aqueous solutions as those of Preparation Example 1 were prepared.

### 2) Co-precipitation Process

The same reactor as used in Preparation Example 1 was used under the same conditions as above except that the input time and amount of each metal salt solution were changed.

Specifically, while the first metal salt aqueous solution was put at 0.3 L/time, the impeller speed of the reactor was adjusted into 140 rpm to perform a co-precipitation reaction until precipitates had a diameter of about 15.0 µm. Herein, the solution was controlled to reside in the reactor for 15 hours or more at average by adjusting the flow rate, and after a reaction reached a steady state, the reactants were allowed to a little longer stay in the steady state to obtain a denser co-precipitation compound.

Subsequently, a mixing ratio of the first and second metal salt aqueous solutions was changed to supply them at a total feed rate of 0.5 L/hour, wherein the first metal salt aqueous solution started to be supplied at a feed rate of 0.5 L/hour, but the feed rate was gradually reduced down into 0.05 L/hour, and the second metal salt aqueous solution was supplied at a feed rate of 0.5 L/hour. Herein, the solutions were controlled to reside in the reactor within 15 hours at average by adjusting the flow rates, and a co-precipitation reaction was performed until final precipitates had a diameter of 5.3 µm.

### 3) Post Treatment Process

The precipitates obtained according to the co-precipitation process were filtered, washed with water, and dried in a 100 °C oven for 24 hours to prepare a large particle diameter particle active material precursor having a composition of (Ni_{0.88}Co_{0.095}Mn_{0.025})(OH)₂ and an average particle diameter of 5 µm.

### (Preparation Example 3: Preparation of Large Particle Diameter Oxide Precursor)

The precursor having the core-shell concentration gradient large particle diameter (Ni_{0.88}Co_{0.095}Mn_{0.025})(OH)₂ composition according to Preparation Example 1 was charged in a heat treatment furnace and then, heat-treated, while an air atmosphere was introduced thereinto at 200 mL/min, to prepare a large particle diameter porous Ni_{0.88}Co_{0.095}Mn_{0.025}O₂ oxide precursor. The heat treatment process was performed by increasing a temperature at 2.5 °C/min up to 700 °C and maintaining it at 700 °C for 5 hours.

### (Preparation Example 4: Preparation of Small Particle Diameter Oxide Precursor)

The precursor having the core-shell concentration gradient small particle diameter (Ni_{0.88}Co_{0.095}Mn_{0.025})(OH)₂ composition according to Preparation Example 2 was charged in a heat treatment furnace and then, heat-treated, while an air atmosphere was introduced thereinto at 200 mL/min to prepare a small particle diameter porous Ni_{0.88}Co_{0.095}Mn_{0.025}O₂ oxide precursor. The heat treatment process was performed by increasing a temperature at 2.5 °C/min up to 700 °C and then, maintaining it at 700 °C for 5 hours.

### (Example 1)

### 1) Preparation of Large Particle Diameter Active Material

The large particle diameter porous Ni_{0.88}Co_{0.095}Mn_{0.025}O₂ oxide precursor, ZrO₂ having an average particle diameter (D50) of 50 nm (4N, Sigma-Aldrich Co., Ltd.), and Al(OH)₃ (4N, Sigma-Aldrich Co., Ltd.) were uniformly mixed to prepare a first mixture. During the mixing, an amount of ZrO₂ was used to include 0.34 wt% of Zr in a final product, and an amount of Al(OH)₃ was used to include 0.014 wt% of Al in the final product.

The aforementioned first mixture was mixed with LiOH·H₂O (battery grade, Samchun Chemicals) so that Ni, Co, and Mn had a mole ratio of 1:1.05 with Li, preparing a second mixture.

The second mixture was charged in a tube furnace (an interior diameter: 50 mm, a length: 1,000 mm) and then, second fired, while oxygen was introduced thereinto at 200 mL/min. The second firing process was performed by increasing a temperature at 2.5 °C/min up to 730 °C and maintaining it for 16 hours, and subsequently, a product obtained from the firing process was naturally cooled down to 25 °C.

Subsequently, the cooled product was washed to remove residual lithium on the surface and then, dry-mixed with H₃BO₃, and this mixture was maintained at 380 °C for 5 hours to prepare a cathode active material. The prepared cathode active material was a large particle diameter active composed of secondary particles material coated with B on the surface, formed by agglomerating primary particles having an average particle diameter (D50) of 0.75 µm and thus having an average particle diameter (D50) of 16.0 µm, and including ZrO₂ particles having an average particle diameter (D50) of 50 nm inside the secondary particles. The prepared active material had a total composition of Li_{1.05} (Ni_{0.88}Co_{0.095}Mn_{0.025})_{0.995}Al_{0.005}O₂ and included the secondary particles having a Li_{1.05} (Ni_{0.92}Co_{0.067}Mn_{0.013})_{0.995}Al_{0.005}O₂ core portion and a Li_{1.05} (Ni_{0.85}Co_{0.12}Mn_{0.03})_{0.995}Al_{0.005}O₂ shell portion, wherein the core portion constantly maintained overall 92 mol% of Ni, and the shell portion had a Ni molar content decreasing in a direction from the interface with the core portion to the outermost surface portion and thus a ratio of a nickel molar content at the outermost relative to a nickel molar content on the interface with the core portion was 0.92. In addition, an average particle diameter (D50) of the core portions of the secondary particles was 63% based on 100% of the average particle diameter (D50) of the secondary particles.

The prepared active material had a Zr content of 0.34 wt% based on 100 wt% of the cathode active material. In addition, a content of the coated B was 0.1 wt%.

### 2) Preparation of Small Particle Diameter Active Material

A small particle diameter active material composed of secondary particles coated with B on the surface, formed by agglomerating primary particles having an average particle diameter (D50) of 0.5 µm and thus having an average particle diameter (D50) of 5.0 µm, and including ZrO₂ having a small particle average particle diameter (D50) of 50.0 nm inside the secondary particles was prepared according to the same method as the 3) except that the small particle diameter oxide precursor was used instead of the large particle diameter oxide precursor. The prepared active material had a total composition of Li_{1.05} (Ni_{0.88}Co_{0.095}Mn_{0.025})_{0.995}Al_{0.005}O₂ and included the secondary particles having a Li_{1.05}(Ni_{0.92}Co_{0.067}Mn_{0.013})_{0.995}Al_{0.005}O₂ core portion and a Li_{1.05}(Ni_{0.85}Co_{0.12}Mn__{0.03})_{0.995}Al_{0.005}O₂ shell portion, wherein the core portion constantly maintained overall Ni of 92 mol%, and the shell portion had a nickel molar content decreasing in a direction in a direction from the interface with the core portion to the outermost surface portion and thus a ratio of a nickel molar content at the outermost relative to a nickel molar content on the interface with the core portion was 0.92. In addition, the average particle diameter (D50) of the core portions of the secondary particles was 70% based on 100% of the average particle diameter (D50) of the secondary particles.

In the prepared active material, a content of Zr was 0.34 wt% based on 100 wt% of the cathode active material. In addition, a content of the coated B was 0.1 wt%.

The prepared large particle diameter active material and the small particle diameter active material were mixed in a weight ratio of 8 : 2 to prepare a final cathode active material. In the final cathode active material, the content of Zr was 0.34 wt% based on 100 wt% of the cathode active material.

### 3) Manufacture of Half-cell

The prepared final cathode active material, a polyvinylidene fluoride binder (Tradename: KF1100), and a denka black conductive material were mixed in a weight ratio of 92.5:3.5:4, and this mixture was added to an N-methyl-2-pyrrolidone solvent to prepare cathode active material slurry.

The slurry was coated on an Al foil (a thickness: 15 µm) current collector using a doctor blade, dried, and then compressed to manufacture a cathode. A loading amount of the cathode was 14.6 mg/cm², and the compression density was 3.1 g/cm³.

The cathode, a lithium metal anode (a thickness: 200 µm, Honzo metal), an electrolyte solution, and a polypropylene separator were used to manufacture a 2032 half-cell in a common method. The electrolyte solution was prepared by dissolving 1 M LiPF6 in a mixed solvent of ethylene carbonate, dimethyl carbonate, and ethylmethyl carbonate (in a mixing ratio of 3:4:3 volume%) and adding vinylene carbonate thereto. Herein, the vinylene carbonate was added in an amount of 1.5 wt% based on 100 wt% of the mixed solvent in which 1 M LiPF₆ was dissolved.

### (Example 2)

An active material was prepared according to the same method as Example 1 except that the amount of ZrO₂ was changed to include 0.1 wt% of Zr in a final product during the process of preparing the first mixture by uniformly mixing the large particle diameter or small particle diameter porous Ni_{0.88}Co_{0.095}Mn_{0.025}O₂ oxide precursor, ZrO₂ having an average particle diameter (D50) of 50 nm (4N, Sigma-Aldrich Co., Ltd.), and Al(OH)₃ (4N, Sigma-Aldrich Co., Ltd.) to prepare a large particle diameter active material and a small particle diameter active material and then, mix them in a ratio of 8:2.

### (Example 3)

An active material was prepared according to the same method as Example 1 except that the amount of ZrO₂ was changed to include 0.35 wt% of Zr in a final product during the process of preparing the first mixture by uniformly mixing the large particle diameter or small particle diameter porous Ni_{0.88}Co_{0.095}Mn_{0.025}O₂ oxide precursor, ZrO₂ having an average particle diameter (D50) of 50 nm (4N, Sigma-Aldrich Co., Ltd.), and Al(OH)₃ (4N, Sigma-Aldrich Co., Ltd.) to prepare a large particle diameter active material and a small particle diameter active material and then, mix them in a ratio of 8:2.

### (Example 4)

An active material was prepared according to the same method as Example 1 except that the amount of ZrO₂ was changed to include 0.7 wt% of Zr in a final product during the process of preparing the first mixture by uniformly mixing the large particle diameter or small particle diameter porous Ni_{0.88}Co_{0.095}Mn_{0.025}O₂ oxide precursor, ZrO₂ having an average particle diameter (D50) of 50 nm (4N, Sigma-Aldrich Co., Ltd.), and Al(OH)₃(4N, Sigma-Aldrich Co., Ltd.) to prepare a large particle diameter active material and a small particle diameter active material and then, mix them in a ratio of 8:2.

### (Example 5)

An active material was prepared according to the same method as Example 5 except that ZrO₂ having an average particle diameter (D50) of 500 nm was used, and the amount of ZrO₂ was changed to include 0.34 wt% of Zr in a final product during the process of preparing the first mixture by uniformly mixing the large particle diameter or small particle diameter porous Ni_{0.88}Co_{0.095}Mn_{0.025}O₂ oxide precursor, ZrO₂ having an average particle diameter (D50) of 50 nm (4N, Sigma-Aldrich Co., Ltd.), and Al(OH)₃ (4N, Sigma-Aldrich Co., Ltd.) to prepare a large particle diameter active material and a small particle diameter active material and then, mix them in a ratio of 8:2.

### (Example 6)

An active material was prepared according to the same method as Example 5 except that ZrO₂ having an average particle diameter (D50) of 800 nm was used during the process of preparing the first mixture by uniformly mixing the large particle diameter or small particle diameter porous Ni_{0.88}Co_{0.095}Mn_{0.025}O₂ oxide precursor, ZrO₂ having an average particle diameter (D50) of 50 nm (4N, Sigma-Aldrich Co., Ltd.), and Al(OH)₃ (4N, Sigma-Aldrich Co., Ltd.) to prepare a large particle diameter active material and a small particle diameter active material and then, mix them in a ratio of 8:2.

### (Comparative Example 1)

### 1) Preparation of Large Particle Diameter Active Material

The large particle diameter hydroxide precursor having a composition of (Ni_{0.88}Co_{0.095}Mn_{0.025})(OH)₂ according to Preparation Example 1, a LiOH·H₂O (battery grade, SamChun Chemicals) lithium raw material, ZrO₂ (4N, Sigma Aldrich Co., Ltd.), and Al(OH)₃ (4N, Sigma Aldrich Co., Ltd.) were mixed. During this mixing process, the hydroxide precursor and the lithium raw material were used to have a mole ratio of 1:1.05 of Ni, Co, and Mn with Li in a final active material, and in addition, the amounts of Zr and Al, that is, doping amounts, in the final active material were respectively 0.34 wt% and 0.014 wt%.

The mixture was introduced into a tube furnace (an inner diameter: 50 mm, a length: 1,000 mm) and second fired, while oxygen was introduced at 200 mL/min. The second firing process was performed by increasing a temperature at 2.5 °C/min up to 730 °C and maintaining it for 16 hours, and subsequently, the fired product was naturally cooled down to 25 °C.

Subsequently, the cooled product was washed to remove residual lithium on the surface and dry-mixed with H₃BO₃, and this mixture was maintained at 380 °C for 5 hours to prepare a cathode active material. The prepared cathode active material was a large particle diameter active material composed of secondary particles coated with B on the surface and formed by agglomerating primary particles having an average particle diameter (D50) of 0.75 µm and thus having an average particle diameter (D50) of 15.0 µm and had a total composition of Li_{1.05} (Ni_{0.88}Co_{0.095}Mn_{0.025})_{0.9985}Zr_{0.0037}Al_{0.005}O₂, and the secondary particles included a Li_{1.05} (Ni_{0.92}Co_{0.067}Mn_{0.013})_{0.9985}Zr_{0.0037}Al_{0.005}O₂ core portion and a Li_{1.05} (Ni_{0.85}Co_{0.12}Mn_{0.03})_{0.9985}Zr_{0.0037}Al_{0.005}O₂ shell portion, wherein the core portion constantly maintained overall 92 mol% of Ni, and the shell portion had a nickel molar content decreasing in a direction from the interface with the core portion to the outermost surface portion and thus a ratio of a nickel molar content at the outermost relative to a nickel molar content on the interface with the core portion was 0.92. In addition, the core portion had an average particle diameter (D50) of 63% based on 100% of the average particle diameter (D50) of the secondary particles.

An amount of the coated B was 0.1 wt%.

### 2) Preparation of Small Particle Diameter Active Material

A small particle diameter active material composed of secondary particles coated with B on the surface and formed by agglomerating primary particles having an average particle diameter (D50) of 0.5 µm and thus having an average particle diameter (D50) of 5.0 µm was prepared according to the same method as the aforementioned process of using the large particle diameter hydroxide precursor except that the small particle diameter hydroxide precursor having a composition of (Ni_{0.88}Co_{0.095}Mn_{0.025})(OH)₂ according to Preparation Example 2 was used. The prepared active material had a total composition of Li_{1.05} (Ni_{0.88}Co_{0.095}Mn_{0.025})_{0.9985}Zr_{0.0037}Al_{0.005}O₂ and included a Li_{1.05} (Ni_{0.92}Co_{0.067}Mn_{0.013})_{0.9985}Zr_{0.0037}Al_{0.005}O₂ core portion and a Li_{1.05} (Ni_{0.85}Co_{0.12}Mn_{0.03})_{0.9985}Zr_{0.0037}Al_{0.005}O₂ shell portion, wherein the core portion constantly maintained overall 92 mol% of Ni, and the shell portion had a nickel molar content decreasing in a direction from the interface with the core portion to the outermost surface portion and thus a ratio of a nickel molar content at the outermost relative to a nickel molar content on the interface with the core portion was 0.92. In addition, an average particle diameter (D50) of the core portion was 70% based on 100% of the average particle diameter (D50) of the secondary particles.

An amount of the coated B was 0.1 wt%.

The large particle diameter active material and the small particle diameter active material were mixed in a weight ratio of 8 : 2 to prepare a final cathode active material.

The cathode active material was used according to the same method as in Example 1 to manufacture a half-cell.

### (Comparative Example 2)

An active material was prepared according to the same method as Example 1 except that the amount of ZrO₂ was changed to include 0.05 wt% of Zr in a final product during the process of preparing the first mixture by uniformly mixing the large particle diameter or small particle diameter porous Ni_{0.88}Co_{0.095}Mn_{0.025}O₂ oxide precursor, ZrO₂ (4N, Sigma Aldrich Co., Ltd.), and Al(OH)₃ (4N, Sigma Aldrich Co., Ltd) to prepare a large particle diameter active material and a small particle diameter active material and then, mix them in a ratio of 8:2.

### (Comparative Example 3)

An active material was prepared according to the same method as Example 1 except that the amount of ZrO₂ was changed to include 1.0 wt% of Zr in a final product during the process of preparing the first mixture by uniformly mixing the large particle diameter or small particle diameter porous Ni_{0.88}Co_{0.095}Mn_{0.025}O₂ oxide precursor, ZrO₂ (4N, Sigma Aldrich Co., Ltd.), and Al(OH)₃ (4N, Sigma Aldrich Co., Ltd) to prepare a large particle diameter active material and a small particle diameter active material and then, mix them in a ratio of 8:2.

### (Comparative Example 4)

An active material was prepared according to the same method as Example 5 except that ZrO₂ having an average particle diameter (D50) of 20 nm was used during the process of preparing the first mixture by uniformly mixing the large particle diameter or small particle diameter porous Ni_{0.88}Co_{0.095}Mn_{0.025}O₂ oxide precursor, ZrO₂ (4N, Sigma Aldrich Co., Ltd.), and Al(OH)₃ (4N, Sigma Aldrich Co., Ltd) to prepare a large particle diameter active material and a small particle diameter active material and then, mix them in a ratio of 8:2.

### (Comparative Example 5)

An active material was prepared according to the same method as Example 5 except that ZrO₂ having an average particle diameter (D50) of 1000 nm was used during the process of preparing the first mixture by uniformly mixing the large particle diameter or small particle diameter porous Ni_{0.88}Co_{0.095}Mn_{0.025}O₂ oxide precursor, ZrO₂ (4N, Sigma Aldrich Co., Ltd.), and Al(OH)₃ (4N, Sigma Aldrich Co., Ltd) to prepare a large particle diameter active material and a small particle diameter active material and then, mix them in a ratio of 8:2

### * SEM Analysis

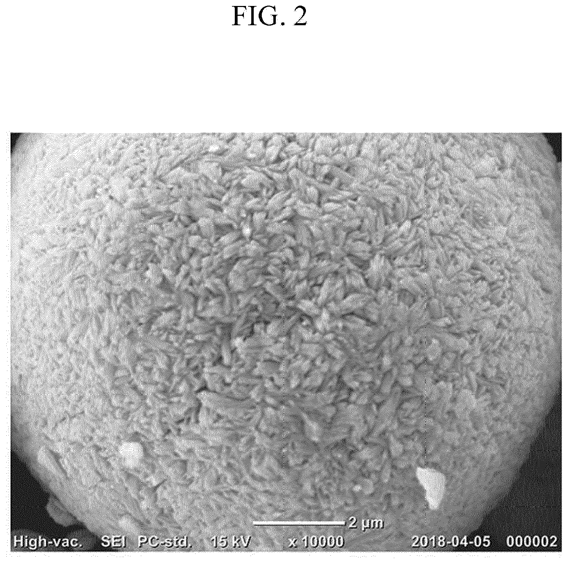

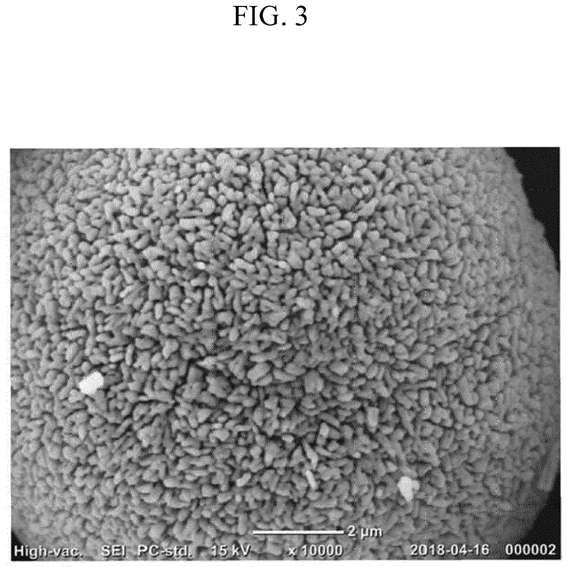

In order to examine surface morphology of the large particle diameter hydroxide precursor having the Ni_{0.88}Co_{0.095}Mn_{0.025}OH₂ composition according to Preparation Example 1 and surface morphology of the large particle diameter oxide precursor having the Ni_{0.88}Co_{0.095}Mn_{0.025}O₂ composition according to Preparation Example 3, surface SEM photographs of the large particle diameter hydroxide precursors of Preparation Examples 1 and 3 are respectively shown in FIGS. 2 and 3.

As shown in FIG. 2, the hydroxide precursor of Preparation Example 1 exhibited a very densely formed surface, but as shown in FIG. 3, the oxide precursor of Preparation Example 3 had a very porous surface.

### * EDS (Energy Dispersive X-ray Spectroscopy) Analysis

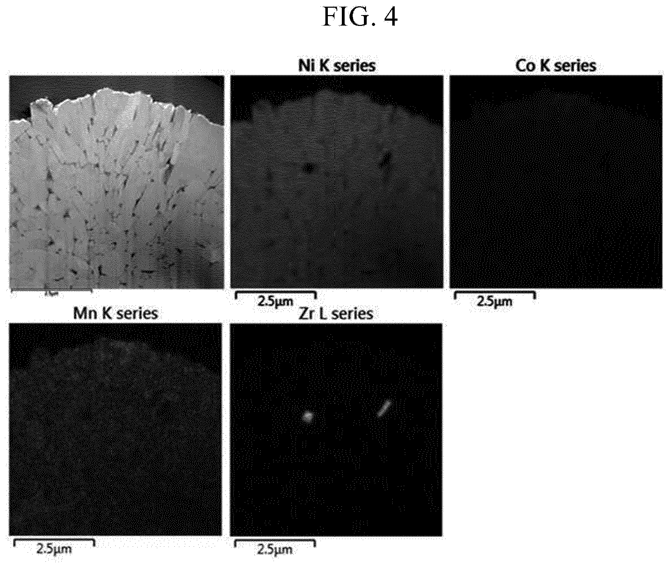

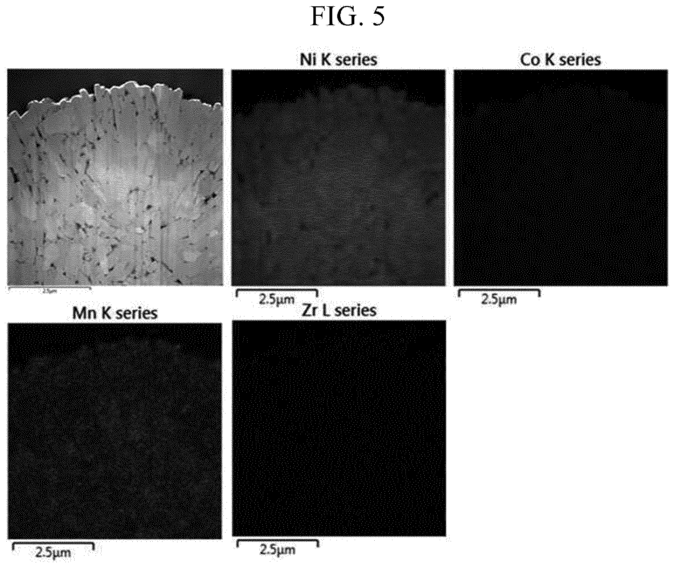

The cross-sections of the cathode active materials according to Example 1 and Comparative Example 1 were cut with FIB (Focused Ion Beam) to analyze cross-section shapes and Ni, Co, Mn, and Zr distributions through an energy dispersive x-ray spectroscopy, and the results are respectively shown in FIGS. 4 and 5.

As shown in FIG. 4, as for the cathode active material according to Example 1, 50 nm-sized ZrO₂ particles were observed on the particle cross-section, but as shown in FIG. 5, as for the cathode active material according to Comparative Example 1, particle-shaped Zr was not found.

### * Evaluation of Electrochemical Characteristics

The half-cells according to Examples 1 to 7 and Comparative Examples 1 to 5 were once 0.2 C charged and 0.2 discharged in a constant current-constant voltage mode within a range of 2.5 V to 4.25 V under a cut-off condition of 1/20 C to measure initial charge and discharge capacity. Among the results, the results of Examples 1 to 4 and Comparative Examples 1 to 3 are shown in Table 1, and then, charge and discharge capacity thereof was used to calculate coulombic efficiency, and the results are shown in Table 1. In addition, the results of Examples 5 to 6 and Comparative Examples 4 to 5 are shown in Table 2. In addition, for comparison, the result of Example 1 is shown in Table 2.

In addition, the half-cells according to Examples 1 to 7 and Comparative Examples 1 to 5 were once 0.2 C charged and 0.2 discharged in a constant current-constant voltage within a range of 2.5 V to 4.25 V under a cut-off condition of 1/20 C at 45 °C, and after applying a discharge current at 100% charge at 4.25 V, voltage fluctuations after 60 seconds were measured to obtain DC-IR (direct current internal resistance). Among the results, the results of Examples 1 to 4 and Comparative Examples 1 to 3 are shown in Table 1, and the results of Examples 5 to 6 and Comparative Examples 4 to 5 are shown in Table 2.

**(Table 1)**

| | Zr content (wt%) in nanoparticle ZrO₂ | ZrO₂ size (nm) | Charge capacity [mAh/g] | Discharge capacity [mAh/g] | Coulombic efficiency [%] | High temperature initial DC-IR [Ω] |
|---|---|---|---|---|---|---|
| Example 1 | 0.34 | 50 | 238.6 | 219.1 | 91.8 | 17.4 |
| Example 2 | 0.1 | 50 | 238.5 | 218.9 | 91.7 | 17.6 |
| Example 3 | 0.35 | 50 | 238.6 | 219.1 | 91.8 | 17.4 |
| Example 4 | 0.7 | 50 | 238.3 | 218.7 | 91.8 | 17.8 |
| Comparative Example 1 | - | 50 | 237.3 | 212.2 | 89.4 | 19.5 |
| Comparative Example 2 | 0.05 | 50 | 237.8 | 217.5 | 91.4 | 19.0 |
| Comparative Example 3 | 1.0 | 50 | 237.5 | 217.2 | 91.5 | 18.5 |

As shown in Table 1, the half-cells including the cathode active materials of Examples 1 to 4 in which nanometer-sized ZrO₂ particles were included inside secondary particles exhibited high charge and discharge capacity, excellent coulombic efficiency, and low initial resistance at a high temperature, compared with Comparative Example 1.

In addition, when the nanometer-sized ZrO₂ particles were included inside secondary particles but included in a very small amount (Comparative Example 2) or in a very excessive amount (Comparative Example 3), initial resistance at a high temperature inappropriately increased.

**(Table 2)**

| | Zr content (wt%) in cathode active material | ZrO₂ average particle diameter (D50) (nm) | Charge capacity [mAh/g] | Discharge capacity [mAh/g] | Coulombic efficiency [%] | High temperatu re initial DC-IR [Ω] |
|---|---|---|---|---|---|---|
| Example 1 | 0.34 | 50 | 238.7 | 219.0 | 91.7 | 17.8 |
| Example 5 | 0.34 | 500 | 238.6 | 219.1 | 91.8 | 17.4 |
| Example 6 | 0.34 | 800 | 238.2 | 218.7 | 91.8 | 17.8 |
| Comparative Example 4 | 0.34 | 20 | 237.5 | 217.3 | 91.5 | 19.0 |
| Comparative Example 5 | 0.34 | 1000 | 237.6 | 216.5 | 91.1 | 18.5 |

As shown in Table 2, the half cells including the cathode active materials of Examples 1, 5, and 6 in which ZrO₂ particles having an average particle diameter (D50) of 50 nm to 800 nm were included inside secondary particles exhibited low initial resistance at a high temperature, compared with a case where the average particle diameter (D50) is too small (Comparative Example 4) or too large (Comparative Example 5).

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be exemplary but not limiting the present invention in any way.

## Claims

1. A cathode active material for a lithium secondary battery, comprising
a lithium nickel cobalt manganese-based oxide represented by Chemical Formula 1 including secondary particles obtained by agglomerating at least one primary particle; and
metal oxide particles having a nano-sized average diameter (D50) and disposed inside the secondary particles.
[Chemical Formula 1] Liₐ[NiₓCo_{y}Mn_{z}]ₜM₁₋ₜO₂₋ₚXₚ
wherein, in Chemical Formula 1,
M is any one element selected from Al, Mg, Sn, Ca, Ge, Ga, B, Ti, Mo, Nb, and W
X is any one element selected from F, N, and P,
0.8≤a≤1.3,
0.6 ≤ x ≤ 0.95, 0 < y ≤ 0.2, 0 < z ≤ 0.2, x + y + z = 1, 0 ≤ t ≤ 1, and 0 ≤ p ≤ 0.1.

2. The cathode active material of claim 1, wherein in Chemical Formula 1, 0.8 ≤ x ≤ 0.95, 0 < y ≤ 0.1, and 0 < z ≤ 0.1.

3. The cathode active material of claim 1, wherein the metal oxide comprises at least one selected from ZrO₂, WO₃, CeO₂, TiO₂, HfO₂, Co₃O₄, La₂O₃, BaO, SrO, and a combination thereof.

4. The cathode active material of claim 1, wherein the metal oxide has an average particle diameter (D50) of 50 nm to 800 nm.

5. The cathode active material of claim 1, wherein a metal content of the metal oxide is 0.1 wt% to 0.7 wt% based on 100 wt% of the cathode active material.

6. The cathode active material of claim 1, wherein the secondary particles comprise a core portion in which a nickel molar content is constant and a shell portion which surrounds the outer surface of the core portion and has a concentration gradient in which a nickel molar content gradually decreases in a direction from the interface with the core portion to the outermost surface.

7. The cathode active material of claim 1, which further comprises a coating layer disposed on the surface of the secondary particles.

8. A method of preparing a cathode active material for a lithium secondary battery, comprising
preparing a hydroxide precursor particle including nickel, cobalt, and manganese;
subjecting the hydroxide precursor particles to first firing to prepare porous oxide precursor particles;
mixing the oxide precursor particles and a metal oxide to prepare a first mixture;
mixing the first mixture and a lithium raw material to prepare a second mixture; and
subjecting the second mixture to second firing.

9. The method of claim 8, wherein the first firing is performed by increasing a temperature up to 400 °C to 800 °C at 1.0 °C/min to 5.0 °C/min, and maintaining for 3 hours to 20 hours.

10. The method of claim 8, wherein the first firing is performed while blowing air or oxygen at a rate of 10 mL/min to 50 L/min.

11. The method of claim 8, wherein in the mixing the oxide precursor particles and a metal oxide to prepare a first mixture, a doping raw material is further included.

12. The method of claim 8, wherein
the preparing of the hydroxide precursor particle including nickel, cobalt, and manganese comprises
preparing a first metal salt solution and a second metal salt solution each including a nickel raw material, a cobalt raw material, a manganese raw material, and a solvent, and having different molar concentrations of the nickel raw material;
a first co-precipitating in which a core portion is formed by supplying the first metal salt solution at a constant concentration to a reactor in which the pH is maintained constant and a chelating agent;
second co-precipitating in which a product forming a shell portion surrounding the outer surface of the core portion is formed by gradually decreasing a feed rate of the first metal salt aqueous solution and at the same time gradually increasing a feed rate of the second metal salt aqueous solution after the first co-precipitating; and
drying the product.

13. A lithium secondary battery comprising
the cathode including a cathode active material of any one of claim 1 to claim 7;
an anode; and
a non-aqueous electrolyte
